# EUROPEAN PATENT SPECIFICATION

(11) **EP 4 108 475 B1**
(45) Date of publication and mention of the grant of the patent: **28.06.2023**
(21) Application number: 22176946.6
(22) Date of filing: 02.06.2022
(51) Int. Cl.: B60C 11/00, B60C 11/03, B60C 11/12

(54) **TYRE**
REIFEN
PNEUMATIQUE

(30) Priority: 22.06.2021 JP 2021103398
(43) Date of publication of application: 28.12.2022
(73) Proprietor: Sumitomo Rubber Industries, Ltd., Kobe-shi, Hyogo-ken 651-0072 (JP)
(72) Inventor: ISHIGAKI, Yuichi, Kobe-shi, 651-0072 (JP); TSUZUKI, Yuka, Kobe-shi, 651-0072 (JP)
(74) Representative: Manitz Finsterwald Patent- und Rechtsanwaltspartnerschaft mbB

(56) References cited:
- WO-A1-2018/031369
- WO-A1-2019/066837
- JP-A- H0 761 209
- US-A1- 2012 234 442

## Description

### RELATED APPLICATIONS

This application claims the benefit of foreign priority to Japanese Patent Application No. JP2021-103398, filed June 22, 2021.

### FIELD OF THE INVENTION

The present invention relates to a tyre.

### BACKGROUND OF THE INVENTION

Patent Document 1 below has proposed a pneumatic tyre with a tread portion including a base rubber layer having a specified loss tangent. The base rubber layer is made of low heat generation rubber that has a loss tangent smaller than that of a cap rubber layer forming the outer surface of the tread. As a result, the tyre is expected to improve wear resistance and fuel efficiency.

### [Patent document]

[Patent document 1] Japanese Unexamined Patent Application Publication 2017-013539

A tyre in accordance with the preamble of claim 1 is known from WO 2019/066837 A1. Related tyres are known from JP H07 61209 A, WO 2018/031369 A1 and US 2012/234442 A1.

### SUMMARY OF THE INVENTION

In recent years, maintenance-free tyres for a long time have been required due to consideration for the environment and the practical application of automatic vehicle driving technology. In particular, tyres that can exhibit sufficient wet performance and steering stability until the end of wear of the tread portion are required.

The present invention has been made in view of the above circumstances and has a major object to provide a tyre capable of maintaining wet performance and steering stability even as the tread portion wears.

According to the invention, a tyre includes a tread portion including a first cap rubber layer forming a ground contact surface and having a loss tangent tan δ1, and a second cap rubber layer disposed inwardly in a tyre radial direction of the first cap rubber layer and having a loss tangent tan δ2, the loss tangent tan δ2 being greater than the loss tangent tan δ1, wherein the loss tangent tan δ1 and the loss tangent tan δ2 are values measured using a dynamic viscoelasticity measuring device under the conditions of initial strain: 5%, amplitude of dynamic strain: +/-1%, frequency: 10 Hz, deformation mode: tensile deformation, and measurement temperature: 30 degrees C in accordance with JIS-K6394. The tread portion is provided with a plurality of sipes opening to the ground contact surface. The plurality of sipes extends inwardly in a tyre radial direction from the ground contact surface to a location beyond a boundary between the first cap rubber layer and the second cap rubber layer. A maximum length L2 of the plurality of sipes in the second cap rubber layer is smaller than a length L1 of the plurality of sipes at the ground contact surface.

According to an embodiment of the invention, the loss tangent tan δ1 is in a range from 0.13 to 0.29.

According to an embodiment of the invention, the loss tangent tan δ2 is in a range from 0.30 to 0.40.

According to an embodiment of the invention, the tread portion further comprises a base rubber layer disposed inwardly in the tyre radial direction of the second cap rubber layer, wherein the base rubber layer has a loss tangent tan δb smaller than the loss tangent tan 61.

According to an embodiment of the invention, the loss tangent tan δb is equal to or less than 0.12.

According to an embodiment of the invention, the tread portion is provided with a plurality of circumferential grooves extending continuously in a tyre circumferential direction, and a maximum depth of the plurality of sipes is in a range from 75% to 100% of a maximum depth of the plurality of circumferential grooves.

According to an embodiment of the invention, the maximum length L2 of the plurality of sipes in the second cap rubber layer is in a range from 60% to 80% of the length L1 of the plurality of sipes at the ground contact surface.

According to an embodiment of the invention, in a cross-sectional view of each of the plurality of sipes, the plurality of sipes extends in a wavy manner in the tyre radial direction.

According to an embodiment of the invention, each of the plurality of sipes has a wavelength in a range from 20% to 60% of a thickness in the tyre radial direction of the second cap rubber layer.

According to an embodiment of the invention, the plurality of sipes comprises one or more lateral sipes extending in a tyre axial direction.

According to an embodiment of the invention, the plurality of sipes comprises one or more circumferential sipes extending in a tyre circumferential direction.

### BRIEF DESCRIPTION OF THE DRAWINGS

FIG. 1 is a meridian cross-sectional view of a tyre in accordance with the present invention;
FIG. 2 is an enlarged cross-sectional view of a land portion of FIG. 1;
FIG. 3 is an enlarged cross-sectional view of the land portion and a sipe;
FIG. 4 is an enlarged cross-sectional view of the land portion when a second cap rubber layer is exposed;
FIG. 5 is an enlarged cross-sectional view of a land portion and a sipe in accordance with another embodiment of the invention;
FIG. 6 is a cross-sectional view of a sipe in accordance with another embodiment of the invention;
FIG. 7 is an enlarged cross-sectional view of a circumferential sipe; and
FIG. 8 is an enlarged view of a land portion and a sipe of a tyre in accordance with a comparative example.

### DETAILED DESCRIPTRION OF THE INVENTION

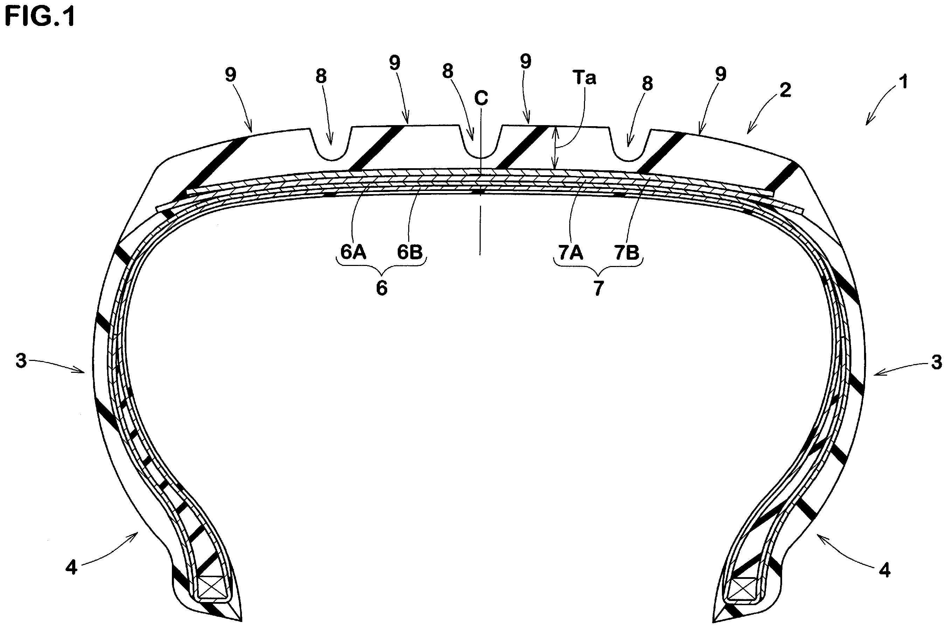

Hereinafter, one or more embodiments of the present invention will be described with reference to the drawings. FIG. 1 is a meridian cross-sectional view of a tyre 1 in a normal state in accordance with an embodiment of the present invention. As illustrates in FIG. 1, the tyre 1 according to the present invention is preferably embodied as a pneumatic tyre for passenger car. However, the present invention is not limited to such an aspect. The present invention may be applied to tyres for heavy-duty vehicle and motorcycle.

As used herein, when a tyre is a pneumatic tyre based on a standard, the "normal state" is such that the tyre 1 is mounted onto a standard wheel rim with a standard pressure but loaded with no tyre load. If a tyre is not based on the standards, the normal state is a standard state of use according to the purpose of use of the tyre and means a state of no load. As used herein, unless otherwise noted, dimensions of portions of the tyre are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre is based, wherein the standard pressure is the "maximum air pressure" in JATMA, the maximum pressure given in the "Tyre Load Limits at Various Cold Inflation Pressures" table in TRA, and the "Inflation Pressure" in ETRTO, for example.

The tyre according to the present embodiment of the invention includes tyre components therein such as a carcass 6, a belt layer 7 and the like. Known material or members are appropriately adopted for these tyre components.

The carcass 6 extends between a pair of bead portions 4 through a pair of sidewall portions 3 and a tread portion 2. In the present embodiment of the invention, the carcass 6, for example, includes two carcass plies 6A and 6B. The carcass plies 6A and 6B, for example, include a plurality of organic fiber carcass cords that is oriented at an angle of from 75 to 90 degrees with respect to the tyre equator C.

The belt layer 7, for example, includes two belt plies 7A and 7B. The belt plies 7A and 7B, for example, include a plurality of belt cords oriented at an angle of from 10 to 45 degrees with respect to the tyre circumferential direction. For the belt cords, organic fiber cords and steel cords may be adopted as appropriate, for example. In another embodiment of the invention, a tread reinforcing layer, e.g., a band layer (not illustrated), may be disposed radially outwardly of the belt layer 7.

In the present embodiment of the invention, the tread portion 2 is provided with a plurality of circumferential grooves 8 extending continuously in the tyre circumferential direction. Thus, the tread portion 2 includes a plurality of land portions 9 which is divided by the plurality of the circumferential grooves 8. Note that the present invention is not limited to such an aspect.

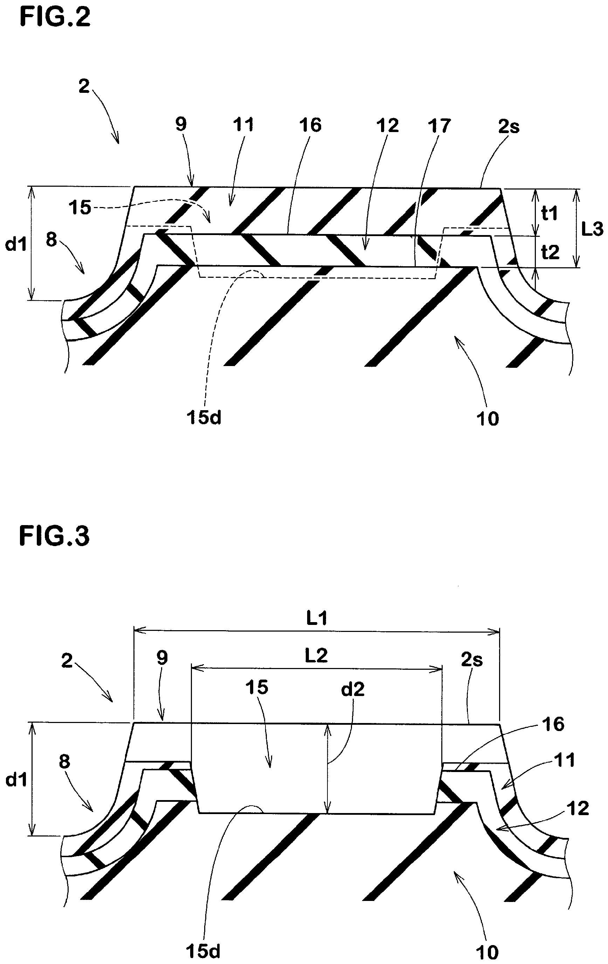

FIG. 2 illustrates an enlarged cross-sectional view of one of the land portions 9 as a figure for explaining the configuration of the tread portion 2. As illustrated in FIG. 2, the tread portion 2 includes a first cap rubber layer 11 forming a ground contact surface 2s, and a second cap rubber layer 12 disposed inwardly in the tyre radial direction of the first cap rubber layer 11. In the present embodiment of the invention, the tread portion 2 further includes a base rubber layer 10 disposed inwardly in the tyre radial direction of the second cap rubber layer 12. Thus, the tread portion 2 according to the present embodiment of the invention is composed of three rubber layers consisting of the first cap rubber layer 11, the second cap rubber layer 12, and the base rubber layer 10. Note that the present invention is not limited to such an aspect. In FIG. 2 and the subsequent figures, the rubber layers are hatched differently from each other. However, in FIG. 1, the hatching is omitted to avoid complicating the figure.

In the present invention, a loss tangent tan 62 of the second cap rubber layer 12 is greater than a loss tangent tan 61 of the first cap rubber layer 11. As used herein, loss tangent tan δ is a value measured using a dynamic viscoelasticity measuring device (Iplexer series) manufactured by GABO under the following conditions in accordance with JIS-K6394.
Initial strain: 5%
Amplitude of dynamic strain: +/-1%
Frequency: 10 Hz
Deformation mode: tensile deformation
Measurement temperature: 30 degrees C.

The tread portion 2 is provided with a plurality of sipes 15 opening to the ground contact surface 2s. In the present embodiment of the invention, the plurality of sipes 15 is configured as a plurality of lateral sipes extending in the tyre axial direction. Note that in the present invention the sipes 15 is not particularly limited to such an embodiment of the invention. Thus, the sipes 15 may include one or more circumferential sipes extending in the tyre circumferential direction. Further, both lateral sipes and circumferential sipes may be provided on the tread portion 2. Since FIG. 2 is a cross section of the land portion 9 at a position not including the sipe, the bottom 15d of one of the sipes 15 is shown by a broken line in FIG. 2.

As used herein, "sipe" is an incision having a small width. The sipe has includes two opposite inner wall surfaces facing substantially parallel and a width between the two inner wall surfaces is equal to or less than 1.5 mm. Further, "substantially parallel" means that the angle between the two inner wall surfaces is equal to or less than 10 degrees. A width of a sipe is preferably in a range from 0.5 to 1.5 mm, more preferably 0.4 to 1.0 mm. The configuration of a sipe is not particularly limited. For example, a sipe may have at least one of a pair of sipe edges having a chamfer portion. In addition, the bottom of the sipe may be connected to a flask-bottom having a width greater than 1.5 mm.

FIG. 3 illustrates an enlarged cross-sectional view of the land portion 9 at a location of one of the sipes 15. Note that the cross section of the sipe 15 shown in FIG. 3 corresponds to the cross section along a sipe length direction of the sipe 15. As illustrated in FIG. 3, each sipe 15, at least partially, extends from the ground contact surface 2s to a location beyond a boundary 16 between the first cap rubber layer 11 and the second cap rubber layer 12. Further, each sipe 15 has a maximum length L2 in the second cap rubber layer and a length L1 at the ground contact surface 2s, wherein the maximum length L2 is smaller than the length L1. The lengths L1 and L2 mean the so-called periphery lengths measured parallel to the ground contact surface 2s of the tread portion 2 and along the sipe length direction.

The present invention, by adopting the above configuration, can maintain wet performance and steering stability even if the tread portion 2 wear progresses. The following mechanism is inferred as the reason.

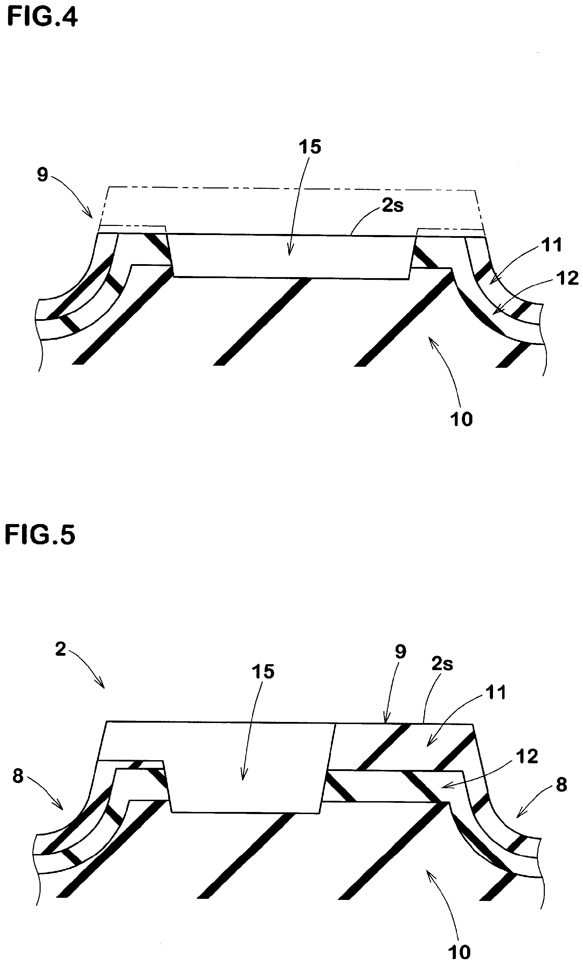

FIG. 4 illustrates an enlarged cross-sectional view of the land portion 9 when the tread portion 2 has worn down and the second cap rubber layer 12 has exposed as a ground contact surface 2s. As illustrated in FIG. 4, since the loss tangent tan δ2 of the second cap rubber layer 12 is greater than the loss tangent tan δ1 of the first cap rubber layer 11, the second cap rubber layer 12 which has been exposed at the ground contact surface 2s can exert large grip on wet roads. As a result, wet performance can be maintained.

Further, as illustrated in FIG. 3, in the present invention, the maximum length L2 of the sipe 15 in the second cap rubber layer 12 is smaller than the length L1 of the sipe 15 at the ground contact surface 2s. Thus, as illustrated in FIG. 4, a length of the sipe 15 when the second cap rubber layer 12 is exposed is relatively small. Therefore, even when the second cap rubber layer 12 is exposed, the rigidity of the tread portion 2 can be maintained, and the steering stability can also be maintained. Furthermore, in the present invention, since the rigidity of the tread portion can be maintained, the progress of wear from the state where the second cap rubber layer 12 has been exposed can be delayed.

In the present invention, for the above-mentioned reason, it is considered that wet performance and steering stability can be maintained even if the tread portion 2 has worn down.

Hereinafter, a more detailed configuration of the present embodiment of the invention will be described. Note that each configuration described below shows a specific aspect of the present embodiment of the invention. Thus, the present invention can exert the above-mentioned effects even if the tyre does not include the configuration described below. Further, if any one of the configurations described below is applied independently to the tyre of the present invention having the above-mentioned characteristics, the performance improvement according to the additional configuration can be expected. Furthermore, when some of the configurations described below are applied in combination, it is expected that the performance of the additional configurations will be improved.

As illustrated in FIG. 2, the first cap rubber layer 11, for example, has a thickness t1 in a range of from 25% to 35% of a total thickness Ta (shown in FIG. 1) of the tread rubber from the ground contact surface of the tread portion 2 to an outer surface of the belt layer 7. The second cap rubber layer 12, for example, has a thickness t2 in a range of from 15% to 25% of the total thickness Ta of the tread rubber.

A distance L3 in the tyre radial direction from the ground contact surface of the tread portion 2 to the boundary 17 between the second cap rubber layer 12 and the base rubber layer 10 is in a range of from 60% to 80% of the maximum depth d1 of the circumferential grooves 8. Due to the arrangement of the rubber layers in this way, after the middle stage of wear of the tread portion 2, the second cap rubber layer 12, which can be expected to have a large grip force, is exposed. Thus, wet performance can be reliably maintained. In the present embodiment of the invention, the boundary 16 between the first cap rubber layer 11 and the second cap rubber layer 12, and the boundary 17 between the second cap rubber layer 12 and the base rubber layer 10 extend in parallel with the ground contact surface 2s of the tread portion 2 in the land portion.

The loss tangent tan δ1 of the first cap rubber layer 11 is preferably equal to or more than 0.13, more preferably equal to or more than 0.15, but preferably equal to or less than 0.29, more preferably equal to or less than 0.25. The loss tangent tan δ2 of the second cap rubber layer 12 is preferably equal to or more than 0.30, more preferably equal to or more than 0.33, but preferably equal to or less than 0.40, more preferably equal to or less than 0.37. Further, the loss tangent tan δ1 is preferably in a range of from 50% to 65% of the loss tangent tan δ2. Such a first cap rubber layer 11 and a second cap rubber layer 12 can improve the overall performance of the tyre in a well-balanced manner, and can suppress the peeling of rubber at the boundary 16 between the first cap rubber layer 11 and the second cap rubber layer 12.

Preferably, the loss tangent tan δb of the base rubber layer 10 is smaller than the loss tangent tan δ1 of the first cap rubber layer 11. Specifically, the loss tangent tan δb, for example, is equal to or less than 0.12, preferably in a range of from 0.07 to 0.12. This can suppress excessive heat generation in the tread portion 2 and improve tyre durability. However, the loss tangent tan δb of the base rubber layer 10 is not limited to this range.

The values of the loss tangent of the above rubber layers can be obtained by appropriately combining known materials, and the detailed description thereof is omitted herein.

As illustrated in FIG. 3, each sipe 15 according to the present embodiment of the invention is configured as a lateral sipe extending in the tyre axial direction, preferably extending in parallel with the tyre axial direction. Further, each sipe 15 traverses the ground contact surface of the land portion completely in the tyre axial direction. As illustrated in FIG. 4, each sipe 15 according to the present embodiment of the invention has both ends terminating within the land portion 9 when the second cap rubber layer 12 has exposed as a ground contact surface. Thus, the rigidity of the tread portion 2 can reliably be maintained with the second cap rubber layer 12 exposed.

As illustrated in FIG.3, the length L2 of each sipe 15 in the second cap rubber layer 12 is equal to or more than 60% of the length L1 of the sipe on the ground contact surface 2s, more preferably equal to or more than 65%, but preferably equal to or less than 80%, more preferably equal to or less than 75%. Such a sipe 15 can help to balance wet performance and steering stability when the tread portion 2 has worn down.

The bottom 15d of each sipe 15, for example, is located in the base rubber layer 10. Note that the bottom 15d of each sipe 15 may be located in the second cap rubber layer 12. The maximum depth d2 of each sipe 15, for example, is preferably in a range of from 75% to 100% of the maximum depth d1 of the circumferential grooves 8. Such a sipe 15 can help to improve wet performance.

The shape of the cross section of each sipe 15 along the sipe length direction is not limited to the above-mentioned embodiment of the invention. FIG. 5 illustrates another embodiment of the sipes 15. As illustrated in FIG. 5, in this embodiment of the invention, the sipe 15, on the ground contact surface 2s of the land portion 9, has one end communicated with one of the circumferential grooves 8 and the other end terminating within the land portion 9. Further, in this embodiment of the invention, when the second cap rubber layer 12 has exposed, the both ends of the sipe 15 terminate within the land portion. Such a sipe 15 can help to offer excellent steering stability.

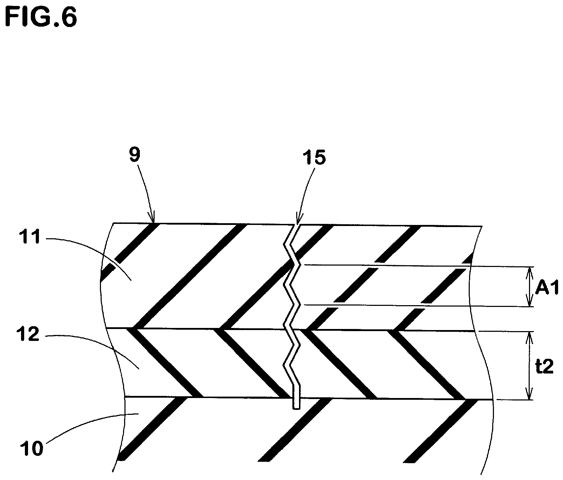

FIG. 6 illustrates a cross-sectional view of a sipe 15 in accordance with another embodiment of the invention. Note that FIG. 6 shows a cross section of the sipe 15 orthogonal to the sipe length direction. As illustrated in FIG. 6, in the cross-sectional view of the sipe 15, the sipe 15 extends in a wavy manner in the tyre radial direction. Such a sipe 15 can increase the rigidity of the land portion 9 since the pair of sipe inner walls comes into contact with each other to engage, and can exhibit excellent steering stability. Needless to say, the above-mentioned configuration shown in FIG. 3 and the like can be applied as the configuration of the cross section of the sipe 15 shown in FIG. 6 along the sipe length direction.

In FIG. 6, a wave length A1 in the tyre radial direction of the sipe 15 is preferably in a range of from 20% to 60% of the thickness t2 of the second cap rubber layer 12. This can surely enhance the above-mentioned effect.

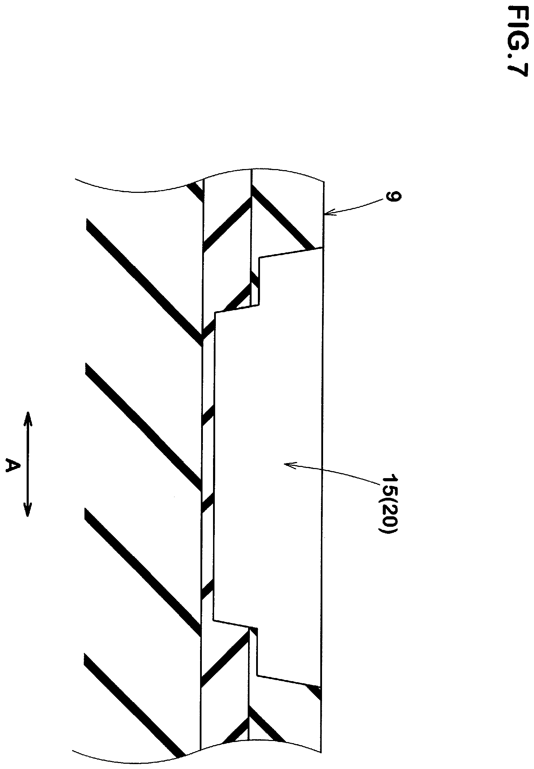

FIG. 7 illustrates an enlarged cross-sectional view of a circumferential sipe 20 in accordance with another embodiment of the invention. In FIG. 7, note that the arrow A corresponds to the tyre circumferential direction. As illustrated in FIG. 7, one of the sipes 15 according to the present invention may be configured as a circumferential sipe 20 extending in the tyre circumferential direction. In this case, the circumferential sipe 20 can provide frictional force in the tyre axial direction and can improve cornering performance on wet roads.

While the particularly preferable embodiments of the invention of the tyre in accordance with the present invention have been described in detail, the present invention is not limited to the illustrated embodiments, but can be modified and carried out in various aspects within the scope of the appended claims.

### [Example]

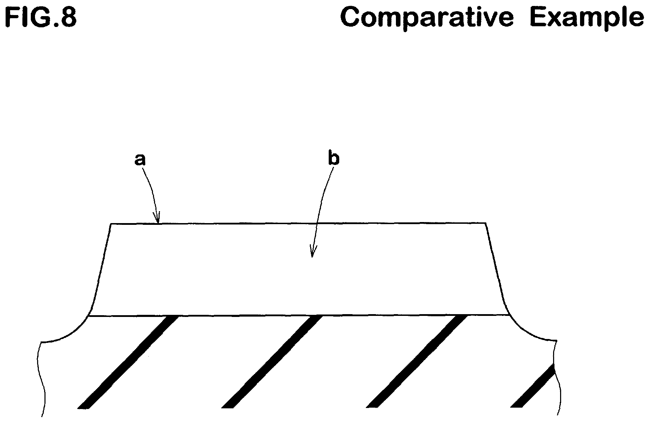

As tyres according to the present invention, pneumatic tyres of size 235/65R16C were prepared (Examples). These tyres have the basic structure shown in FIG.1. Further, these tyres have tread rubber layers shown in FIG.2 where a plurality of sipes shown in FIG.3 are formed. As a comparative example, a tyre having land portion (a) with sipes b shown in FIG. 8 was also prepared. The comparative tyre has a loss tangent tan 61 of the first cap rubber layer which is greater than a loss tangent tan δ2 of the second cap rubber layer. The sipes b of the comparative example traverse the land portion (a) completely in the tyre axial direction. The comparative tyre is substantially the same as the tyres of the examples except for the above-mentioned features. Then, wet performance and steering stability of these test tyres were tested for each of the new and 50% worn conditions. The 50% worn condition is a condition in which the depths of the circumferential grooves have worn down until 50% depth. The common specifications and test methods for each test tyre are as follows.
Rim size: 16x7.0J
Tyre inner pressure: 475 kPa
Test vehicle: displacement 3000cc, rear-wheel drive
Test tyre location: all wheels

### Wet performance test (new and 50% worn conditions):

The wet performance when driving on a wet road surface with the test vehicle equipped with test tyres was evaluated by the driver's sensuality. The test results are indicated in Tables 1 and 2 using a score with the wet performance of the comparative example as a new product as 100, and the larger the value, the better the wet performance.

### Steering stability test (new and 50% worn conditions):

The steering stability when driving on a dry road surface with the test vehicle equipped with test tyres was evaluated by the driver's sensuality. The test results are indicated in Tables 1 and 2 using a score with the steering stability of the comparative example as a new product as 100, and the larger the value, the better the steering stability.

Tables 1 and 2 show the test results.

**[Table 1]**

| | Ref. | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Land portion and sipe configuration | FIG. 8 | FIG. 3 | FIG. 3 | FIG. 3 | FIG. 3 | FIG. 3 | FIG. 3 | FIG. 3 | FIG. 3 |
| Loss tangent tan δ1 of first cap rubber layer | 0.35 | 0.20 | 0.13 | 0.15 | 0.25 | 0.29 | 0.20 | 0.20 | 0.20 |
| Loss tangent tan δ2 of second cap rubber layer | 0.20 | 0.35 | 0.35 | 0.35 | 0.35 | 0.35 | 0.30 | 0.33 | 0.37 |
| Sipe length L2 in second cap rubber layer / sipe length L1 at ground contact surface (%) | - | 70 | 70 | 70 | 70 | 70 | 70 | 70 | 70 |
| Wet performance under new condition (score) | 100 | 95 | 93 | 95 | 97 | 99 | 94 | 95 | 95 |
| Steering stability under new condition (score) | 100 | 98 | 97 | 98 | 99 | 100 | 98 | 98 | 98 |
| Wet performance under 50% worn condition (score) | 60 | 80 | 80 | 80 | 80 | 80 | 77 | 79 | 83 |
| Steering stability under 50% worn condition (score) | 80 | 90 | 90 | 90 | 90 | 90 | 88 | 90 | 91 |

**[Table 2]**

| | Ex. 9 | Ex. 10 | Ex. 11 | Ex. 12 | Ex. 13 |
|---|---|---|---|---|---|
| Land portion and sipe configuration | FIG. 3 | FIG. 3 | FIG. 3 | FIG. 3 | FIG. 3 |
| Loss tangent tan δ1 of first cap rubber layer | 0.20 | 0.20 | 0.20 | 0.20 | 0.20 |
| Loss tangent tan δ2 of second cap rubber layer | 0.40 | 0.35 | 0.35 | 0.35 | 0.35 |
| Sipe length L2 in second cap rubber layer / sipe length L1 at ground contact surface (%) | 70 | 60 | 65 | 75 | 80 |
| Wet performance under new condition (score) | 96 | 94 | 95 | 96 | 97 |
| Steering stability under new condition (score) | 98 | 97 | 98 | 98 | 99 |
| Wet performance under 50% worn condition (score) | 85 | 76 | 78 | 84 | 87 |
| Steering stability under 50% worn condition (score) | 92 | 91 | 90 | 89 | 87 |

As shown in Tables 1 and 2, in the comparative example, the wet performance was 60 points and the steering stability was 80 points in the 50% worn condition. On the other hand, the tyres of the examples maintained a high wet performance of 77 to 85 points in the 50% worn condition. In addition, the tyres of the examples maintained a high steering stability of 87 to 92 points in the 50% worn condition. As described above, it was confirmed that the tyres of the examples can maintain wet performance and steering stability even when the tread portion was worn.

## Claims

1. A tyre (1) comprising:
a tread portion (2) comprising
a first cap rubber layer (11) forming a ground contact surface (2s) and having a loss tangent tan δ1, and
a second cap rubber layer (12) disposed inwardly in a tyre radial direction of the first cap rubber layer (11) and having a loss tangent tan δ2, the loss tangent tan δ2 being greater than the loss tangent tan 61, wherein
the loss tangent tan 61 and the loss tangent tan δ2 are values measured using a dynamic viscoelasticity measuring device under the conditions of initial strain: 5%, amplitude of dynamic strain: +/-1%, frequency: 10 Hz, deformation mode: tensile deformation, and measurement temperature: 30 degrees C in accordance with JIS-K6394,
the tread portion (2) is provided with a plurality of sipes (15) opening to the ground contact surface (2s), and
the plurality of sipes (15), at least partially, extends inwardly in the tyre radial direction from the ground contact surface (2s) to a location beyond a boundary (16) between the first cap rubber layer (11) and the second cap rubber layer (12),
**characterized in that**
a maximum length L2 of the plurality of sipes (15) in the second cap rubber layer (12) is smaller than a length L1 of the plurality of sipes (15) at the ground contact surface (2s).

2. The tyre (1) according to claim 1, wherein
the loss tangent tan δ1 is in a range from 0.13 to 0.29.

3. The tyre (1) according to claim 1 or 2, wherein
the loss tangent tan δ2 is in a range from 0.30 to 0.40.

4. The tyre (1) according to any one of claims 1 to 3, the tread portion (2) further comprising a base rubber layer (10) disposed inwardly in the tyre radial direction of the second cap rubber layer (12), wherein
the base rubber layer (10) has a loss tangent tan δb smaller than the loss tangent tan δ1.

5. The tyre (1) according to claim 4, wherein
the loss tangent tan δb is equal to or less than 0.12.

6. The tyre (1) according to any one of claims 1 to 5, wherein
the tread portion (2) is provided with a plurality of circumferential grooves (8) extending continuously in a tyre circumferential direction, and
a maximum depth (d2) of the plurality of sipes (15) is in a range from 75% to 100% of a maximum depth (d1) of the plurality of circumferential grooves (8).

7. The tyre /10) according to any one of claims 1 to 6, wherein
the maximum length L2 of the plurality of sipes (15) in the second cap rubber layer (12) is in a range from 60% to 80% of the length L1 of the plurality of sipes (15) at the ground contact surface (2s).

8. The tyre (1) according to any one of claims 1 to 7, wherein
in a cross-sectional view of each of the plurality of sipes (15) , the plurality of sipes (15) extends in a wavy manner in the tyre radial direction.

9. The tyre (1) according to claim 8, wherein
each of the plurality of sipes (15) has a wavelength (A1) in a range from 20% to 60% of a thickness (t2) in the tyre radial direction of the second cap rubber layer (12).

10. The tyre (1) according to any one of claims 1 to 9, wherein
the plurality of sipes (15) comprises one or more lateral sipes extending in a tyre axial direction.

11. The tyre (1) according to any one of claims 1 to 10, wherein
the plurality of sipes (15) comprises one or more circumferential sipes extending in a tyre circumferential direction

## Patentansprüche

1. Reifen (1), umfassend:
einen Laufflächenabschnitt (2), umfassend
eine erste Deckgummischicht (11), die eine Bodenkontaktfläche (2s) bildet und einen Verlusttangens tan δ1 aufweist, und
eine zweite Deckgummischicht (12), die in einer Reifenradialrichtung innerhalb der ersten Deckgummischicht (11) angeordnet ist und einen Verlusttangens tan δ2 aufweist, wobei der Verlusttangens tan δ2 größer ist als der Verlusttangens tan δ1, wobei
der Verlusttangens tan δ1 und der Verlusttangens tan δ2 Werte sind, die mit einem dynamischen Viskoelastizitätsmessgerät gemessen werden unter den Bedingungen von Anfangsdehnung: 5%, Amplitude der dynamischen Dehnung: +/-1%, Frequenz: 10Hz, Verformungsmodus: Zugverformung und Messtemperatur: 30 Grad C in Übereinstimmung mit JIS-K6394,
der Laufflächenabschnitt (2) mit einer Vielzahl von Feinschnitten (15) versehen ist, die sich zur Bodenkontaktfläche (2s) öffnen, und
die Vielzahl von Feinschnitten (15) sich zumindest teilweise in der Reifenradialrichtung von der Bodenkontaktfläche (2s) bis zu einer Stelle über eine Grenze (16) zwischen der ersten Deckgummischicht (11) und der zweiten Deckgummischicht (12) hinaus nach innen erstreckt,
**dadurch gekennzeichnet, dass**
eine maximale Länge L2 der Vielzahl von Feinschnitten (15) in der zweiten Deckgummischicht (12) kleiner als eine Länge L1 der Vielzahl von Feinschnitten (15) an der Bodenkontaktfläche (2s) ist.

2. Reifen (1) nach Anspruch 1, wobei der Verlusttangens tan δ1 in einem Bereich von 0,13 bis 0,29 liegt.

3. Reifen (1) nach Anspruch 1 oder 2, wobei der Verlusttangens tan δ2 in einem Bereich von 0,30 bis 0,40 liegt.

4. Reifen (1) nach einem der Ansprüche 1 bis 3, wobei der Laufflächenabschnitt (2) ferner eine Basisgummischicht (10) umfasst, die in der Reifenradialrichtung innen von der zweiten Deckgummischicht (12) angeordnet ist, wobei die Basisgummischicht (10) einen Verlusttangens tan δb aufweist, der kleiner als der Verlusttangens tan δ1 ist.

5. Reifen (1) nach Anspruch 4, wobei der Verlusttangens tan δb gleich oder kleiner als 0,12 ist.

6. Reifen (1) nach einem der Ansprüche 1 bis 5, wobei
der Laufflächenabschnitt (2) mit einer ersten Umfangsrille (8) versehen ist, die sich kontinuierlich in einer Reifenumfangsrichtung erstreckt,
eine maximale Tiefe (d2) der Vielzahl von Feinschnitten (15) in einem Bereich von 75% bis 100% einer maximalen Tiefe (d1) der Vielzahl von Umfangsrillen (8) liegt.

7. Reifen (10) nach einem der Ansprüche 1 bis 6, wobei die maximale Länge L2 der Vielzahl von Feinschnitten (15) in der zweiten Deckgummischicht (12) in einem Bereich von 60 % bis 80 % der Länge L1 der Vielzahl von Feinschnitten (15) an der Bodenkontaktfläche (2s) liegt.

8. Reifen (1) nach einem der Ansprüche 1 bis 7, wobei in einer Querschnittsansicht einer jeden der Vielzahl von Feinschnitten (15) die Vielzahl von Feinschnitten (15) sich in der Reifenradialrichtung auf eine wellenförmige Weise erstreckt.

9. Reifen (1) nach Anspruch 8, wobei ein jeder der Vielzahl von Feinschnitten (15) eine Wellenlänge (A1) in einem Bereich von 20 % bis 60 % einer Dicke (t2) in der Reifenradialrichtung der zweiten Deckgummischicht (12) aufweist.

10. Reifen (1) nach einem der Ansprüche 1 bis 9, wobei die Vielzahl von Feinschnitten (15) eine oder mehrere Querfeinschnitte umfasst, die sich in einer Reifenaxialrichtung erstrecken.

11. Reifen (1) nach einem der Ansprüche 1 bis 10, wobei die Vielzahl von Feinschnitten (15) eine oder mehrere Umfangsfeinschnitte umfasst, die sich in einer Reifenumfangsrichtung erstrecken.

## Revendications

1. Pneumatique (1) comprenant :
une portion formant bande de roulement (2) comprenant une première couche de caoutchouc de chape (11) forment une surface de contact au sol (2s) et ayant une tangente de perte tan δ1, et
une seconde couche de caoutchouc de chape (12) disposée à l'intérieur dans une direction radiale du pneumatique de la première couche de caoutchouc de chape (11) et ayant une tangente de perte tan δ2, la tangente de perte tan 52 étant plus grande que la tangente de perte tan δ1, dans lequel
la tangente de perte tan 51 et la tangente de perte tan 52 sont des valeurs mesurées en utilisant un dispositif de mesurage de viscoélasticité dynamique sous les conditions de : contrainte initiale: 5 %, amplitude de contrainte dynamique: ±1 %, fréquence: 10 Hz, mode de déformation: déformation traction, et température de mesurage: 30 degrés C en accord avec JIS-K6394,
la portion formant bande de roulement (2) est dotée d'une pluralité de fentes (15) s'ouvrant sur la surface de contact au sol (2s), et
la pluralité de fentes (15), au moins partiellement, s'étend à l'intérieur dans la direction radiale du pneumatique depuis la surface de contact au sol (2s) jusqu'à un emplacement au-delà d'une frontière (16) entre la première couche de caoutchouc de chape (11) et la seconde couche de caoutchouc de chape (12),
**caractérisé en ce que**
une longueur maximum L2 de la pluralité de fentes (15) dans la seconde couche de caoutchouc de chape (12) est plus petite qu'une longueur L1 de la pluralité de fentes (15) au niveau de la surface de contact au sol (2s).

2. Pneumatique (1) selon la revendication 1, dans lequel la tangente de perte tan 51 est dans une plage allant de 0,13 à 0,29.

3. Pneumatique (1) selon la revendication 1 ou 2, dans lequel la tangente de perte tan δ2 est dans une plage allant de 0,30 à 0,40.

4. Pneumatique (1) selon l'une quelconque des revendications 1 à 3, la portion formant bande de roulement (2) comprenant en outre une couche de caoutchouc de base (10) disposée à l'intérieur dans la direction radiale du pneumatique de la seconde couche de caoutchouc de chape (12), dans lequel
la couche de caoutchouc de base (10) a une tangente de perte tan 5b plus petite que la tangente de perte tan δ1.

5. Pneumatique (1) selon la revendication 4, dans lequel la tangente de perte tan 5b est égale ou inférieure à 0,12.

6. Pneumatique (1) selon l'une quelconque des revendications 1 à 5, dans lequel
la portion formant bande de roulement (2) est dotée d'une pluralité de rainures circonférentielles (8) s'étendant en continu dans une direction circonférentielle du pneumatique, et
une profondeur maximum (d2) de la pluralité de fentes (15) est dans une plage allant de 75 % à 100 % d'une profondeur maximum (d1) de la pluralité de rainures circonférentielles (8).

7. Pneumatique (1) selon l'une quelconque des revendications 1 à 6, dans lequel
la longueur maximum L2 de la pluralité de fentes (15) dans la seconde couche de caoutchouc de chape (12) est dans une plage allant de 60 % à 80 % de la longueur L1 de la pluralité de fentes (15) au niveau de la surface de contact au sol (2s).

8. Pneumatique (1) selon l'une quelconque des revendications 1 à 7, dans lequel
dans une vue en section transversale de chacune de la pluralité de fentes (15), la pluralité de fentes (15) s'étendent d'une manière ondulée dans la direction radiale du pneumatique.

9. Pneumatique (1) selon la revendication 8, dans lequel
chacune de la pluralité de fentes (15) a une longueur d'onde (A1) dans une plage allant de 20 % à 60 % d'une épaisseur (t2) dans la direction radiale du pneumatique de la seconde couche de caoutchouc de chape (12).

10. Pneumatique (1) selon l'une quelconque des revendications 1 à 9, dans lequel
la pluralité de fentes (15) comprend une ou plusieurs fentes latérales s'étendant dans une direction axiale du pneumatique.

11. Pneumatique (1) selon l'une quelconque des revendications 1 à 10, dans lequel
la pluralité de fentes (15) comprend une ou plusieurs fentes circonférentielles s'étendant dans une direction circonférentielle du pneumatique.
